# EUROPEAN PATENT APPLICATION

(11) **EP 4 831 147 A1**
(43) Date of publication of application: **28.10.2026**
(21) Application number: 26172903.2
(22) Date of filing: 16.04.2026
(51) Int. Cl.: C04B 35/83, C04B 41/00, C04B 41/45, C04B 103/60

(54) **A PROCESS OF TREATING A CARBON-CARBON COMPOSITE**

(30) Priority: 25.04.2025 US 202519189759
(71) Applicant: RTX Corporation, Farmington, CT 06032 (US)
(72) Inventor: Sudre, Olivier, Glastonbury, 06073 (US); Winder, Calvin Jay, Cromwell, 06416 (US)
(74) Representative: Schmitt-Nilson Schraud Waibel Wohlfrom Patentanwälte Partnerschaft mbB

(57) **Abstract**

A process of treating a carbon-carbon composite material including modifying a surface of the carbon-carbon composite material to increase a hydrophilic surface functionality; applying a plasma surface treatment to the carbon-carbon composite material; infiltrating the carbon-carbon composite with an oxidation inhibiting composition; applying filler particles to the surface of the carbon-carbon composite material to make the oxidation inhibiting composition resistant to shear flow and heating the carbon-carbon composite at a predetermined temperature sufficient to form a deposit from the oxidation inhibiting composition in at least some pores of the carbon-carbon composite.

## Description

The present disclosure is directed to a carbon-carbon composite gas turbine component with improved oxidative resistance by infiltration of filler particles into carbon-carbon pores to enhance retention of mono-aluminum phosphate treatment into the gas turbine component.

A gas turbine engine includes a rotor rotatable about an engine central axis. The rotor can define a seal surface. A shaft is rotatable about the engine central axis and defines an annular seal channel that opens to the seal surface. A seal can be disposed in the annular seal channel for sealing against the seal surface.

The seal can be produced from a carbon fiber reinforced graphite boron nitride matrix material, also called carbon-carbon composite. A carbon-carbon composite seal offers superior wear resistance, lighter weight and lower friction relative to a metal seal.

However, carbon-carbon composite material often contains 5 to 15% open porosity. Air can infiltrate into an inner section of a carbon-carbon bulk composite material through open pores under high pressure in service conditions. Such air channels may induce internal oxidation in the bulk carbon-carbon composite and accelerate oxidation damage.

Carbon-carbon composites are often treated with mono-aluminum phosphates (MALP) to prevent oxidation damage. One method of MALP application includes immersing the carbon-carbon composite in a solution of phosphoric acid and aluminum hydroxide. Then the carbon-carbon composite gets dried and then baked up to 1,200 to 2,000 degrees Fahrenheit.

However, open pore size in carbon-carbon composites can vary significantly. Pressure differentials across the carbon-carbon composite can influence the MALP solution sometimes forcing the MALP out of the pores. Insufficient MALP coverage over the open pores can reduce oxidation resistance of carbon-carbon composites.

In accordance with the present disclosure, there is provided a process of treating a carbon-carbon composite material comprising modifying a surface of the carbon-carbon composite material to increase a hydrophilic surface functionality; applying a plasma surface treatment to the carbon-carbon composite material; infiltrating the carbon-carbon composite with an oxidation inhibiting composition; infiltrating filler particles into the pores of the carbon-carbon composite material to make the oxidation inhibiting composition resistant to shear flow; and heating the carbon-carbon composite at a predetermined temperature sufficient to form a deposit from the oxidation inhibiting composition in at least some pores of the carbon-carbon composite.

A further embodiment of any of the foregoing embodiments may additionally and/or alternatively include the filler particles are applied to the carbon-carbon composite prior to the plasma surface treatment, and the plasma surface treatment is applied to the carbon-carbon composite prior to application of the oxidation inhibiting composition.

Particular embodiments further may include at least one, or a plurality of, the following optional features, alone or in combination with each other:

A further embodiment of any of the foregoing embodiments may additionally and/or alternatively include the filler particles are selected from the group consisting of graphite, boron nitride, mica, fine silica, LaPO4, non-abrasive silicates and combinations thereof.

A further embodiment of any of the foregoing embodiments may additionally and/or alternatively include the filler particles are mixed with the oxidation inhibiting composition.

A further embodiment of any of the foregoing embodiments may additionally and/or alternatively include the filler particles are submicron sized.

A further embodiment of any of the foregoing embodiments may additionally and/or alternatively include the filler particles are configured to increase a viscosity of the oxidating inhibiting composition during the application of the oxidation inhibiting composition.

A further embodiment of any of the foregoing embodiments may additionally and/or alternatively include the process further comprising making the oxidation inhibiting composition resistant to shear flow.

In accordance with the present disclosure, there is provided a carbon-carbon composite material treated with a plasma surface treatment prior to applying an oxidation inhibiting composition, the treatment comprising modifying a surface of the carbon-carbon composite material to increase a hydrophilic surface functionality; applying a plasma surface treatment to the carbon-carbon composite material; infiltrating the carbon-carbon composite with an oxidation inhibiting composition; infiltrating filler particles into the pores of the carbon-carbon composite material to make the oxidation inhibiting composition resistant to shear flow; and heating the carbon-carbon composite at a predetermined temperature sufficient to form a deposit from the oxidation inhibiting composition in at least some pores of the carbon-carbon composite.

Particular embodiments further may include at least one, or a plurality of, the following optional features, alone or in combination with each other:

A further embodiment of any of the foregoing embodiments may additionally and/or alternatively include the filler particles are applied to the carbon-carbon composite prior to the plasma surface treatment, and the plasma surface treatment is applied to the carbon-carbon composite prior to application of the oxidation inhibiting composition.

A further embodiment of any of the foregoing embodiments may additionally and/or alternatively include the filler particles are selected from the group consisting of graphite, boron nitride, mica, fine silica, LaPO4, non-abrasive silicates and combinations thereof.

A further embodiment of any of the foregoing embodiments may additionally and/or alternatively include the filler particles are mixed with the oxidation inhibiting composition.

A further embodiment of any of the foregoing embodiments may additionally and/or alternatively include the filler particles are configured to increase a viscosity of the oxidating inhibiting composition during the application of the oxidating inhibiting composition.

A further embodiment of any of the foregoing embodiments may additionally and/or alternatively include the oxidation inhibiting composition is resistant to shear flow as a result of the filler particles application.

In accordance with the present disclosure, there is provided a process for treating a gas turbine engine component made from a carbon-carbon composite material comprising modifying a surface of the carbon-carbon composite material to increase a hydrophilic surface functionality; applying a plasma surface treatment to the carbon-carbon composite material; infiltrating the carbon-carbon composite component with an oxidation inhibiting composition; infiltrating filler particles into the pores of the carbon-carbon composite material to make the oxidation inhibiting composition resistant to shear flow; and heating the carbon-carbon composite component at a predetermined temperature sufficient to form a deposit from the oxidation inhibiting composition in at least some pores of the carbon-carbon composite component.

Particular embodiments further may include at least one, or a plurality of, the following optional features, alone or in combination with each other:
A further embodiment of any of the foregoing embodiments may additionally and/or alternatively include the process further comprising infiltrating the filler particles into the pores of carbon-carbon composite prior to the plasma surface treatment; and applying the plasma surface treatment to the carbon-carbon composite prior to application of the oxidation inhibiting composition.

A further embodiment of any of the foregoing embodiments may additionally and/or alternatively include the process further comprising mixing the filler particles the oxidation inhibiting composition.

A further embodiment of any of the foregoing embodiments may additionally and/or alternatively include the process further comprising configuring the filler particles to increase a viscosity of the oxidating inhibiting composition during the application of the oxidating inhibiting composition.

A further embodiment of any of the foregoing embodiments may additionally and/or alternatively include the process further comprising combining the plasma surface treatment with multiple oxidation inhibiting composition and filler particle infiltration steps and vacuum processes to accelerate the oxidation inhibiting composition solution coverage on open pores of the surface and enhance oxidation resistance of the carbon-carbon composite material.

A further embodiment of any of the foregoing embodiments may additionally and/or alternatively include the filler particles are submicron sized.

A further embodiment of any of the foregoing embodiments may additionally and/or alternatively include the filler particles are selected from the group consisting of graphite, boron nitride, mica, fine silica, LaPO4, non-abrasive silicates and combinations thereof.

Other details of the process are set forth in the following detailed description and the accompanying drawings wherein like reference numerals depict like elements.

The above and further advantages of this disclosure may be better understood by referring to the following description in conjunction with the accompanying drawings, in which like reference numerals indicate like elements and features in the various figures. Letters may be appended to reference numbers to distinguish from reference numbers for similar features and to indicate a correspondence to other features in the drawings. For clarity, not every element may be labeled in every figure. The drawings are not necessarily to scale, emphasis instead being placed upon illustrating the principles of the disclosure.
Fig. 1 is a process map of the exemplary process.
Fig. 2 is a diagram illustrating infiltration of MALP and filler particles into carbon-carbon voids including plasma surface treatment.
Fig. 3 is a diagram illustrating infiltration of MALP with filler particles resistant to shear flow into carbon-carbon voids.

The term "retention" refers to reducing or preventing the migration of a material from inside the pores of a carbon-carbon composite out of the pores and onto a surface, for example, in response to heating or ambient humidity. The terms "impregnate," "penetrate," and their derivatives refer to a situation where materials infiltrate or flow into the pores of a porous material. The pores may be in the carbon-carbon composite, a barrier coating overlying the carbon-carbon composite, or a combination thereof.

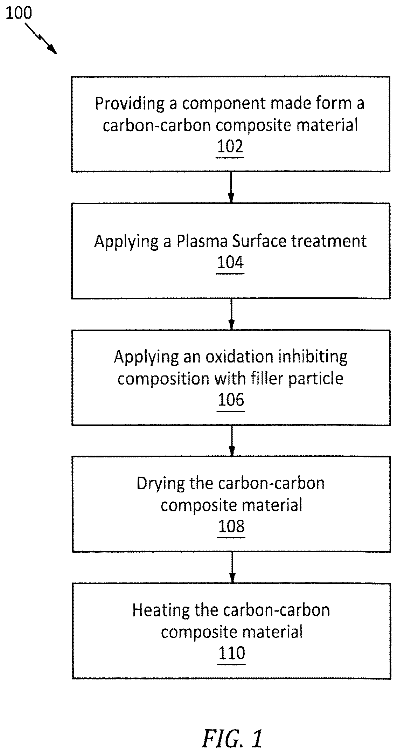

Referring to Fig. 1, Fig. 2, and Fig.3, an exemplary process map and diagrams are shown. The exemplary process 100 shown in Fig. 1 includes at step 102, providing a component made from a carbon-carbon composite material. Step 104 includes applying a plasma surface treatment to the carbon-carbon composite material. Step 106 includes applying an oxidation inhibiting composition including introducing filler particles into the pores of the carbon-carbon composite material. Step 108 includes drying the carbon-carbon composite material. Step 110 includes heating the carbon-carbon composite material. It is also contemplated that the process 100 can include a treatment available for the carbon-carbon composite material wherein the filler particles are infiltrated into the open pores before the application of the oxidation inhibiting composition. The oxidation inhibiting composition can be without the filler particles or can also include the filler particles. Then a heat treatment can be applied. Further details of the process 100 are described in more detail.

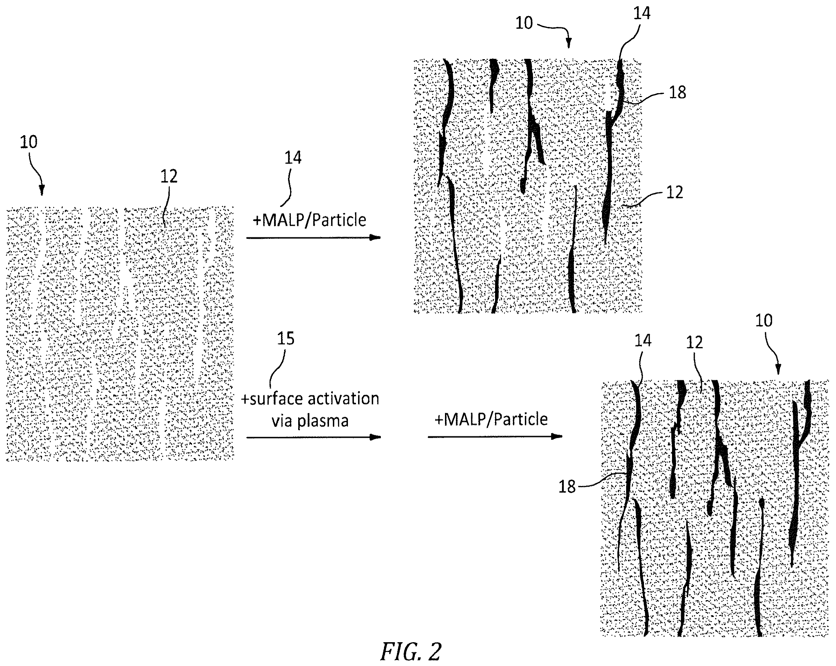

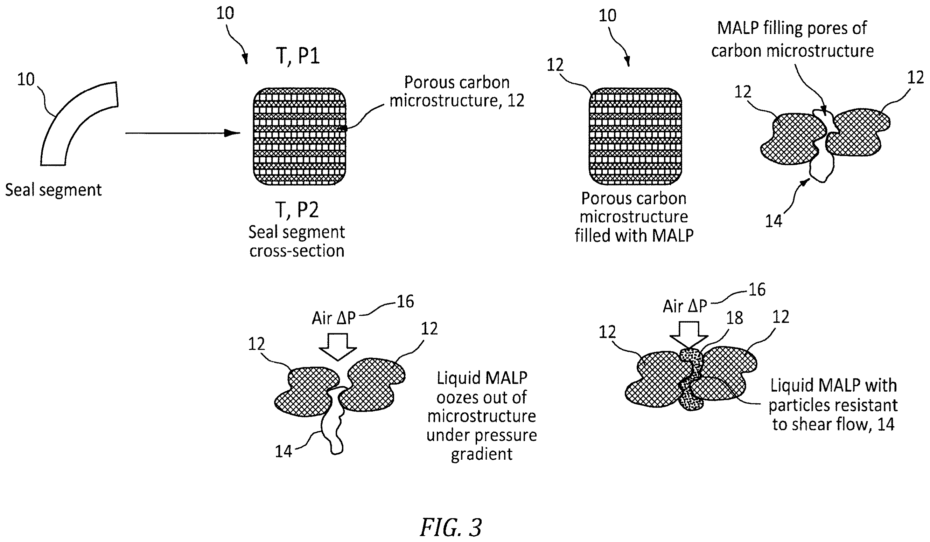

The Fig. 2 and Fig. 3 diagrams illustrate the application of the oxidation inhibiting composition (MALP) to the carbon-carbon composite material.

At Fig. 2, the seal segment 10 is shown with a porous carbon microstructure 12. The porous carbon microstructure 12 can have the oxidation inhibiting composition 14 including the filler particle 18 (MALP + particle) applied. The seal segment 10 can have a pore surface activation via plasma 15 applied to the surface. In addition, the oxidation inhibiting composition 14 including the filler particle 18 (MALP + particle) can be applied to the porous carbon microstructure 12.

At Fig. 3, the seal segment 10 is shown with a porous carbon microstructure 12. The size of the pores can be large and as the oxidation inhibiting composition is applied into the pores the oxidation inhibiting composition may drip out. The addition of filler particles 18 to the oxidation inhibiting composition 14 can increase its viscosity and help the oxidation inhibiting composition 14 to resist shear flow of the oxidation inhibiting composition 14 and maintain the oxidation inhibiting composition 14 within the porous carbon microstructure 12.

Similarly, during operation in the engine, the porous carbon microstructure 12 can be exposed to a temperature T and pressure P1 on one side and a temperature T and pressure P2 on an opposite side. The porous carbon microstructure 12 can have the glassy product from the oxidation inhibiting composition 14 become very fluid. In certain conditions, an air pressure differential (delta P)16 between the pressure P1 and the pressure P2 can force some of the oxidation inhibiting composition 14 out of the porous carbon microstructure 12 during operation. The addition of filler particles 18 to the glassy product resulting from the oxidation inhibiting composition 14 can help the oxidation inhibiting composition 14 to resist shear flow of the oxidation inhibiting composition 14 and maintain the oxidation protection within the porous carbon microstructure 12.

The carbon-carbon composites that may be treated in accordance with the disclosed process may be any carbon-carbon composite. The carbon-carbon composites may be prepared from carbon preforms. Carbon preforms may be made of carbon fibers, which may be formed from pre-oxidized acrylonitrile resin. In one embodiment, these fibers can be layered together to form a shape, such as a seal. The shape is heated and infiltrated with a pyrolyzable carbon source, such as methane, to form the carbon-carbon composite. The carbon-carbon composite may have a bulk density in the range from about 1.5 g/cm3 to about 2.0 g/cm3. The carbon-carbon composite after processing can include 5% of particles at the end of the process.

The disclosed process comprises infiltrating or treating the carbon-carbon composite with the oxidation inhibiting composition including filler particles and then heating the composite at a temperature sufficient to form a deposit from the oxidation inhibiting composition in at least some, and in one embodiment most or all, of the pores of the carbon-carbon composite. The contacted or treated carbon-carbon composite may be heated to a first, lower temperature (for example, about 30°C to about 200°C.) to bake or dry the oxidation inhibiting composition. This step can be used when the oxidation inhibiting composition contains a volatile liquid. This step may be used to fix the oxidation inhibiting composition at a particular predetermined depth in the pores. A second, higher temperature (for example, about 200°C to about 1000°C.) may then be used to form a deposit from the oxidation inhibiting composition within the pores of the carbon-carbon composite.

In one embodiment, the oxidation inhibiting composition may be applied to the bulk of the microstructure of the carbon-carbon composite that may be otherwise susceptible to oxidation. For example, aerospace piston seal rings may have the oxidation inhibiting composition applied to the pore surfaces of the seal.

During application of the oxidation inhibiting composition, the oxidation inhibiting composition may be applied to the carbon-carbon composite by painting, dipping, spraying, or other application methods, selected with reference to application specific criteria. The filler particles can be added to improve retention of the oxidation inhibiting composition. It is also contemplated that the filler particles can be infiltrated into the carbon-carbon composite porous regions prior to application of the oxidation inhibiting composition. This criteria may include, viscosity, end-use, economic consideration, ingredients used, depth of penetration desired, and the like. An increase viscosity of the oxidation inhibiting composition within the final product after heat-treatment when the oxidation inhibiting composition (MALP) has turned into a "glassy" material is expected. During the process a lower viscosity of the oxidation inhibiting composition MALP-based slurry is desired in order to infiltrate the pores. The composition infiltrated into the pores of the carbon-carbon matrix can consist of 5-10% particles and 5 to 10% oxidation inhibiting product.

The treatment level or amount of solids of the oxidation inhibiting composition and filler particles that are applied may be selected to provide for filling of open pores in the carbon-carbon composite at a predetermined depth of penetration. For example the predetermined depth of penetration can be to infiltrate the whole volume. The infiltration of the composition can be from about 20%, 50%, 80% and 100% of the initial pore volume. Preferably 80% and 100% to have full sealing of the porosity but partial filling of the pores might be sufficient. The partial filling volume is preferably near the surface of seal or less distributed to be most effective. The depth of penetration may be selected with reference to the depth suitable for complete oxidation protection and may be further selected with reference to amount that may avoid excessive penetration onto a wearing surface of the seal. In one embodiment, the preselected depth may be in the range of from 2.5 millimeters (about 0.1 inch) to about 5 millimeters (about 0.2 inch), and in one embodiment, the preselected depth may be in a range of less than about 2.5 millimeters (about 0.1 inch). In one embodiment, the preselected depth may be greater than about 5 millimeters (about 0.2 inch). Differing factors may be controlled to achieve the desired depth of penetration. Among the factors that may be controlled are the viscosity of the oxidation inhibiting composition, the coat weight, the soak or contact time of the oxidation inhibiting composition to the carbon-carbon composite prior to drying, the drying temperature, the pore size and porosity of the carbon-carbon composite, the chemical structure of the wetting agent and/or surfactant, the particle size of the filler particle additive, and others.

The treated carbon-carbon composites may be dried and/or heated to remove liquid from the oxidation inhibiting composition in embodiments wherein the oxidation inhibiting composition contains liquid, for example, water, a nonaqueous polar liquid, or a mixture thereof. This drying or heating step is optional. This drying or heating step may be conducted at a temperature in the range of about 30°C. to about 200°C. Drying may be distinguished from dehydration in that water may be present both in a free state and in a bound state. Some oxidation inhibiting compositions may be aqueous solutions or slurries and may have free water as a carrier liquid. Some of the oxidation inhibiting composition ingredients may have water in a bound, hydrating form. Drying removes free water from an aqueous solution or slurry, while dehydrating removes hydrated water.

The treated carbon-carbon composite may be heated, that is dried or baked, at a temperature in the range from about 200°C. to about 1000°C., and in one embodiment about 600°C. to about 1000°C. In one embodiment, this heating step may be conducted at a temperature in the range of about 200°C. to about 900°C., and in one embodiment about 400°C. to about 850°C. The heating step may be performed in an inert environment, such as under a blanket of inert gas (e.g., nitrogen, argon, and the like). The heating step may be conducted for a period from about 0.5 hour up to about 8 hours. In one embodiment, the carbon-carbon composites may be subjected to multiple treatment cycles. For example, from about 2 to about 4 treatment cycles may be used. The drying time and temperature are among the factors that may be controlled to determine the depth of penetration of the oxidation inhibiting composition in the carbon-carbon composite pores.

The carbon-carbon composite can be subjected to a plasma surface treatment prior to the application of the oxidation inhibiting composition to aid in the penetration of the oxidation inhibiting composition. The filler particle additive can be applied to the carbon-carbon composite prior to the plasma surface treatment.

Plasma surface treatment can be applied to the carbon-carbon composite prior to application of the oxidation inhibiting composition, via a low-pressure plasma chamber. Both argon and air can be used in the plasma process. One example of a plasma treatment step includes 1 to 5 minutes in argon plus 5 to 20 minutes in air. Argon is used to clean off the carbon-carbon surface, and air is used to oxidize carbon-carbon surface and modify surface functionality from hydrophobic to hydrophilic to achieve a higher surface tension.

As a result, a ballistic water contact angle can be reduced from about 50 degrees to 70 degrees prior to plasma to 2 degrees to 20 degrees post plasma surface treatment. Lower water contact angles indicate higher surface tension and allow application of the oxidation inhibiting composition solution to infiltrate into the carbon-carbon composite fine pores easily under a capillary effect and thus increase the oxidation inhibiting composition coverage on open pores to enhance oxidation resistance.

Other surface treatment methods can also be applied, such as atmospheric plasma treatment or ozone treatment, ozone combined with ultraviolet treatment, or corona treatment to achieve higher surface tension and enhance the wetting of the oxidation inhibiting composition solutions. Plasma surface treatment can also be combined with multiple oxidation inhibiting composition infiltration steps and vacuum processes to accelerate the oxidation inhibiting composition solution coverage on open pores and enhance oxidation resistance of carbon-carbon composite parts.

In one embodiment, the carbon-carbon composite may be pretreated or warmed prior to application of the oxidation inhibiting composition to aid in the penetration of the oxidation inhibiting composition. The heat treatment may be for a period of about 2 hours at a temperature of about 760°C. The treated carbon-carbon composite may be dried or baked in a non-oxidizing, inert atmosphere, e.g., nitrogen (N2), to optimize the retention of the oxidation inhibitors in the pores. This retention may be improved by heating the carbon-carbon composite to about 200°C. and maintaining the temperature for about 1 hour before heating the carbon-carbon composite to a temperature in the range described above at a rate that removes water without boiling and provides temperature uniformity throughout the load of the carbon-carbon composite. In one embodiment, the maximum temperature may be held for a time sufficient to obtain temperature uniformity throughout the carbon-carbon composite.

The oxidation inhibiting composition may comprise: water, a nonaqueous polar liquid, or a mixture thereof; phosphoric acid or an acid phosphate salt; an aluminum salt; at least one additional metal salt; and the additive filler particle configured to increase viscosity and make the oxidation inhibiting composition more resistant to shear flow. A dispersing agent can be added to the oxidation inhibiting composition to help stabilize the slurry.

The filler particles added to the oxidation inhibiting composition are configured to prevent the oxidation inhibiting composition from flowing out of the microstructures of the carbon-carbon composite material. The microstructure /pore network being filled with more material can essentially seal better as no leakage would go through the seal. The filler particles can be selected from very fine sized particles, such as submicron size or larger depending on the porosity of the carbon-carbon composite material. The filler particles can be selected from materials such as graphite, boron nitride, mica, fine silica, LaPO4, non-abrasive silicates, and the like.

A solution of orthophosphoric acid may be used as a source for the phosphoric acid. The acid phosphate salt may be an ammonium phosphate. The acid phosphate salt may comprise ammonium dihydrogen phosphate or ammonium hydrogen phosphate. The phosphoric acid or acid phosphate salt may be present in the oxidation inhibiting composition at a concentration in the range from about 15 weight percent to about 70 weight percent, and in one embodiment from about 15 weight percent to about 35 weight percent, and in one embodiment about 20 to about 30 weight percent.

The aluminum salt may be an aluminum halide, aluminum nitrate, aluminum phosphate, aluminum sulfate, or a mixture of two or more thereof. A suitable aluminum halide may be aluminum chloride. In one embodiment, the aluminum salt may be an aluminum phosphate. A suitable aluminum phosphate may be mono-aluminum phosphate (Al(H2PO4)3), which is sometimes referred to as MALP, and which is commonly available as an about 50 weight percent concentration solution. In one embodiment, this solution may be present in the oxidation inhibiting composition at a concentration of about 37 to about 52 weight percent. Suitable aluminum salts also include aluminum salts that form an aluminum phosphate in response to outside stimulus, such as heating. The aluminum salt may be present in the oxidation inhibiting composition at a concentration in the range from about 10 weight percent to about 50 weight percent, and in one embodiment from about 15 weight percent to about 30 weight percent.

The cation of the additional metal salt may be multivalent. The metal may be an alkaline earth metal or a transition metal. The multivalent cation may be derived from a non-metallic element such as boron. The term "metal" is used herein to include multivalent elements such as boron that are technically non-metallic. The metal of the additional metal salt may be an alkaline earth metal such as calcium, magnesium, strontium, barium, or a mixture of two or more thereof. The metal for the additional metal salt may be iron, manganese, tin, zinc, or a mixture of two or more thereof. The anion for the additional metal salt may be an inorganic anion such as a phosphate, halide, sulfate or nitrate, or an organic anion such as acetate. In one embodiment, the additional metal salt may be an alkaline earth metal salt such as an alkaline earth metal phosphate. In one embodiment, the additional metal salt may be a magnesium salt such as magnesium phosphate. In one embodiment, the additional metal salt may be an alkaline earth metal nitrate, an alkaline earth metal halide, an alkaline earth metal sulfate, an alkaline earth metal acetate, or a mixture of two or more thereof. In one embodiment, the additional metal salt may be magnesium nitrate, magnesium halide, magnesium sulfate, or a mixture of two or more thereof. In one embodiment, the additional metal salt may comprise: (i) magnesium phosphate; and (ii) a magnesium nitrate, magnesium halide, magnesium sulfate, or a mixture of two or more thereof.

The additional metal salt may be selected with reference to its compatibility with other ingredients in the oxidation inhibiting composition. Compatibility may include metal phosphates that do not precipitate, flocculate, agglomerate, react to form undesirable species, or settle out prior to application of the oxidation inhibiting composition to the carbon-carbon composite. The phosphates may be monobasic (H2PO4 -), dibasic (HPO4 -2), or tribasic (PO4 -3). The phosphates may be hydrated. Examples of alkaline earth metal phosphates that may be used include calcium hydrogen phosphate (calcium phosphate, dibasic), calcium phosphate tribasic octahydrate, magnesium hydrogen phosphate (magnesium phosphate, dibasic), magnesium phosphate tribasic octahydrate, strontium hydrogen phosphate (strontium phosphate, dibasic), strontium phosphate tribasic octahydrate and barium phosphate.

In one embodiment, a chemical equivalent of the additional metal salt may be used as the additional metal salt. Chemical equivalents include compounds that yield an equivalent (in this instance, an equivalent of the additional metal salt) in response to an outside stimulus such as, temperature, hydration, or dehydration. For example, equivalents of alkaline earth metal phosphates may include alkaline earth metal pyrophosphates, hypophosphates, hypophosphites and orthophosphites. Equivalent compounds include magnesium and barium pyrophosphate, magnesium and barium orthophosphate, magnesium and barium hypophosphate, magnesium and barium hypophosphite, and magnesium and barium orthophosphite.

A technical advantage of the disclosed process includes carbon-carbon composite piston seals that provide superior wear resistance, are light weight and low friction relative to metal seals.

Another technical advantage of the disclosed process includes the incorporation of plasma surface treatment prior to application of the oxidation inhibiting composition increases infiltration into fine pores of carbon-carbon composite and increases oxidation resistance.

Another technical advantage of the disclosed process includes application of the plasma surface treatment demonstrates over 35% less weight loss of the oxidation inhibiting composition treated carbon-carbon composite at 850F for 2,500 hours.

Another technical advantage of the disclosed process includes inclusion of filler particles into the oxidation inhibiting composition to prevent the sealant from flowing out of the microstructures of the carbon-carbon composite.

Another technical advantage of the disclosed process includes applying the filler particles prior to the application of the plasma surface treatment.

Another technical advantage of the disclosed process includes the reduction in the leakage of gas through the microstructure of the seal during operation
There has been provided a process of plasma surface treatment prior to application of the oxidation inhibiting composition. While the process has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. A process of treating a carbon-carbon composite material comprising:
modifying a surface of the carbon-carbon composite material to increase a hydrophilic surface functionality;
applying a plasma surface treatment to the carbon-carbon composite material;
infiltrating the carbon-carbon composite with an oxidation inhibiting composition;
infiltrating filler particles into the pores of the carbon-carbon composite material to make the oxidation inhibiting composition resistant to shear flow; and
heating the carbon-carbon composite at a predetermined temperature sufficient to form a deposit from the oxidation inhibiting composition in at least some pores of the carbon-carbon composite.

2. The process according to claim 1, wherein the filler particles are applied to the carbon-carbon composite prior to the plasma surface treatment, and the plasma surface treatment is applied to the carbon-carbon composite prior to application of the oxidation inhibiting composition.

3. The process according to claim 1 or 2, wherein the filler particles are selected from the group consisting of graphite, boron nitride, mica, fine silica, LaPO4, non-abrasive silicates and combinations thereof.

4. The process according to any of claims 1 to 3, wherein the filler particles are mixed with the oxidation inhibiting composition.

5. The process according to any of claims 1 to 4, wherein the filler particles are submicron sized.

6. The process according to any of claims 1 to 5, wherein the filler particles are configured to increase a viscosity of the oxidating inhibiting composition during the application of the oxidation inhibiting composition.

7. The process according to any of claims 1 to 6, further comprising:
making the oxidation inhibiting composition resistant to shear flow.

8. The process according to any of claims 1 to 7, wherein the process is for treating a gas turbine engine component made from a carbon-carbon composite material.

9. The process according to any of claims 1 to 8, further comprising:
combining the plasma surface treatment with multiple oxidation inhibiting composition and filler particle infiltration steps and vacuum processes to accelerate the oxidation inhibiting composition solution coverage on open pores of the surface and enhance oxidation resistance of the carbon-carbon composite material.

10. A carbon-carbon composite material treated with a plasma surface treatment prior to applying an oxidation inhibiting composition, the treatment comprising:
modifying a surface of the carbon-carbon composite material to increase a hydrophilic surface functionality;
applying a plasma surface treatment to the carbon-carbon composite material;
infiltrating the carbon-carbon composite with an oxidation inhibiting composition;
infiltrating filler particles into the pores of the carbon-carbon composite material to make the oxidation inhibiting composition resistant to shear flow; and
heating the carbon-carbon composite at a predetermined temperature sufficient to form a deposit from the oxidation inhibiting composition in at least some pores of the carbon-carbon composite.

11. The carbon-carbon composite material according to claim 10, wherein the filler particles are applied to the carbon-carbon composite prior to the plasma surface treatment, and the plasma surface treatment is applied to the carbon-carbon composite prior to application of the oxidation inhibiting composition.

12. The carbon-carbon composite material according to claim 10 or 11, wherein the filler particles are selected from the group consisting of graphite, boron nitride, mica, fine silica, LaPO4, non-abrasive silicates and combinations thereof.

13. The carbon-carbon composite material according to any of claims 10 to 12, wherein the filler particles are mixed with the oxidation inhibiting composition.

14. The carbon-carbon composite material according to any of claims 10 to 13, wherein the filler particles are configured to increase a viscosity of the oxidating inhibiting composition during the application of the oxidating inhibiting composition.

15. The carbon-carbon composite material according to any of claims 10 to 14, wherein the oxidation inhibiting composition is resistant to shear flow as a result of the filler particles application.
